# EUROPEAN PATENT SPECIFICATION

(11) **EP 4 041 695 B1**
(45) Date of publication and mention of the grant of the patent: **02.12.2026**
(21) Application number: 19948270.4
(22) Date of filing: 09.10.2019
(51) Int. Cl.: C04B 28/04, C04B 18/22, B28B 3/02, B28B 23/00

(54) **RUBBER CONCRETE PRODUCT**
GUMMIBETONPRODUKT
PRODUIT EN BÉTON À BASE DE CAOUTCHOUC

(43) Date of publication of application: 17.08.2022
(73) Proprietor: Royal Melbourne Institute of Technology, Melbourne, Victoria 3000 (AU); Shenzhen University, Nanshan District Shenzhen Guangdong 518060 (CN)
(72) Inventor: WU, Yufei, Kew, VIC 3101 (AU); KAZMI, Syed Minhaj Saleem, Footscray, VIC 3011 (AU); MUNIR, Muhammad Junaid, Footscray, VIC 3011 (AU); ZHOU, Yingwu, Shenzhen, Guangdong 518060 (CN)
(74) Representative: Kramer, Dani
(86) International application number: PCT/CN2019/110035
(87) International publication number: WO 2021/068118

(56) References cited:
- WO-A1-2006/042461
- WO-A1-92/11134
- CN-A- 1 339 413
- CN-A- 1 821 159
- CN-A- 104 628 346
- CN-A- 105 347 750
- CN-A- 108 033 740
- CN-A- 108 191 339
- CN-A- 109 776 053
- JP-A- S5 379 916
- US-A1- 2003 125 425
- US-A1- 2004 007 360
- US-A1- 2004 079 259
- US-B1- 10 161 132

## Description

### FIELD

The invention relates to a method of producing a cast concrete product incorporating rubber aggregate, and a cast concrete product incorporating rubber aggregate.

### BACKGROUND OF THE INVENTION

In the past few decades, disposal of scrap rubber has become a major environmental concern across the globe. Used tyres from the automotive industry forms the largest source of scrap rubber. Noting the growing prevalence of automotive transportation in for example developing countries, it is currently estimated that approximately 1 billion tyres are discarded annually worldwide. Currently, approximately 4 billion waste rubber tyres are located in stockpiles and landfills around the world.

Stockpiles of the waste rubber create serious environmental concerns. Waste rubber is not particularly biodegradable and can easily catch fire to release toxic fumes. Tyre stockpiles also provide breeding habitats for vermin, rats and mosquitoes resulting in a significant health risk to nearby communities. Landfilling and stockpiling of waste rubber is therefore undesirable and, in view of reduced landfill site availability, is becoming less feasible into the future.

Currently, most waste rubber is recycled as fuel in cement kilns, pulp, paper and electric utility boilers. However, as noted above, burning of waste rubber produces hazardous gases and is not environmentally friendly. New, environmentally friendly and cost-efficient uses of waste rubber remain very desirable.

Concrete is a widely used construction material. Its usage worldwide, ton for ton, is believed to be twice that of steel, wood, plastics, and aluminium combined. It is commonly formed from a matrix of aggregate, such as coarse gravel, crushed rocks and sand, and a binder such as Portland cement.

When used in this specification unless the context otherwise requires, the term 'concrete' is intended to relate not only to traditional Portland cement concretes but more broadly to any composite material involving a matrix of aggregate and a binder. Such concretes may include polymer concretes, asphalt concretes, hydraulic cement concretes generally, geopolymers, and other suitable building materials.

Given the amount of concrete used world-wide, concrete is a heavy consumer of natural resources such as rocks, gravel and sand, as well as lime. Finding and using sustainable alternatives to concrete, or components of concrete, is therefore clearly desirable. In this respect many Chinese local authorities have made it mandatory to utilize recycled concrete as aggregate in new construction projects from 2019. Incorporating waste materials into concrete not only slows the depletion of natural resources and dumping of waste, but may also reduce construction costs.

Waste rubber has previously been investigated in the manufacture of concrete. Rubber powder, crumb rubber, and tyre chips have been used as respective substitutes for cement, and fine and coarse aggregates. However, while incorporating waste rubber into concrete may be considered environmentally friendly, the resulting concrete has demonstrated poor performance characteristics as now exemplified.

In previous studies concrete, wherein 100% of natural coarse aggregates were replaced with waste tyre chips, was found to provide an 85% reduction in compressive strength and a 50% reduction in split tensile strength when compared with similar traditional concrete. In similar studies concrete wherein 100% of natural fine aggregates was replaced with crumb rubber, was found to provide a 65% reduction in compressive strength and a 50% reduction in split tensile strength. The reduction in concrete strength was shown to depend on the size and amount of rubber particles incorporated into the concrete such that the larger the rubber particles and the greater the amount of rubber particles used, the lower the resulting concrete strength. Addition of rubber in concrete has also been found to reduce the elastic modulus and flexural strength of the concrete.

While the incorporation of rubber into concrete has nevertheless been shown to provide some positive performance attributes including: improved post-peak behaviour, ductility, dynamic properties, resistance to cracks and freeze-thaw attack when as compared to conventional concrete, the resulting loss in strength as described above has meant that recycling of waste rubber into concrete has traditionally been considered unfeasible.

Various researchers have sought to improve the performance characteristics of concrete incorporating rubber by surface treatment of waste rubber particles. Rubber particles have for example been surface treated with sodium hydroxide solution or saline coupling agent. In other treatments rubber particles have been pre-coated with blended cement. Among these techniques, surface treatment of rubber particles with a NaOH solution is considered to provide the best results.

Surface treatment of rubber particles with NaOH solution has been found to improve the bond between rubber particles and cement paste such that the performance of concrete incorporating treated rubber is comparatively better than concrete incorporating untreated rubber. One previous study reported a 17% increase in compressive strength of concrete incorporating NaOH-treated rubber particles when compared with concrete incorporating untreated waste rubber. However, the strength of concrete incorporating the NaOH-treated rubber still remained much lower than that of conventional concrete.

US patent application 2005/0096412 A1 discloses a concrete composition comprising rubber aggregate having a distinct geometric shape and formed by cutting rubber tyres with special saws or water jets. However, use of specialised cutting tools suggests increased costs and does not appear to of itself overcome concrete performance issues outlined above.

EP patent 2694449 describes a method of producing rubberised concrete in which crumb rubber is partially oxidised to provide hydrophilic surface properties and a gas binding agent which is said to assist with bonding of rubber particles to other components of concrete. Like other surface treatments, it is not clearly apparent that the disclosed technology provides performance properties similar to conventional concrete.

US patent 2003/125425 A1 discloses a method which produces lightweight, porous and free draining concrete construction material by mixing a concrete slurry incorporating rubber aggregate and curing the slurry. Static pressure is provided to the slurry to control the void ratio of the concrete between a range of 0.05 and 2.0 to ensure that the concrete has appropriate permeability and free drainage characteristics suitable for constructing light earth-structures which reduce earth-pressures.

JP patent S5379916 A describes cutting tires into granules and blending them with fine aggregate such as cement and sand, then adding water to create a mixture. The mixture is moulded into a desired shape and cured into a light concrete block which increases the work efficiency whilst having low strength characteristics.

CN 104 628 346 A discloses a method of producing a cast concrete product according to the preamble of claim 1.

The utilization of rubber in concrete therefore remains limited and it would be desirable, though not essential, to provide a concrete product which incorporates rubber while providing satisfactory strength characteristics.

The above discussion of background art is included to explain the context of the present invention. It is not to be taken as an admission that the background art was known or part of the common general knowledge at the priority date of any one of the claims of the specification.

### SUMMARY

According to a first aspect of the invention, there is provided a method of producing a cast concrete product, the method comprising:
forming a concrete slurry incorporating rubber aggregate; and
casting the concrete slurry under sustained pressure of between 2-50MPa throughout casting of the concrete slurry for between 3-48 hours.

Optionally, the method comprises casting the concrete slurry at a pressure between 5-35MPa, further optionally between 6.9-27.7MPa.

Optionally, the method comprises selecting a pressure under which to cast the concrete slurry based upon the amount of rubber aggregate within the concrete slurry to be cast. Further optionally, the method comprises selecting a pressure under which to cast the concrete to reduce the volume of the concrete slurry by approximately the volume of rubber aggregate within the concrete slurry prior to casting under pressure.

Optionally, the rubber aggregate comprises coarse rubber aggregate. Further optionally, the coarse rubber aggregate may substantially comply with the grading requirements for coarse aggregate set out in ASTM C33 / C33M. Alternatively, the coarse rubber aggregate may comply with other standards such as AS2758.1, JGJ 52, and BS EN 12620. Further optionally, the coarse rubber aggregate may form between 1-100%, optionally between 5-80%, optionally between 10-50%, further optionally between 15-35% by volume of all coarse aggregate within the concrete slurry prior to casting under pressure.

Optionally, the rubber aggregate comprises fine rubber aggregate. Further optionally, the fine rubber aggregate may substantially comply with the grading requirements for fine aggregate set out in ASTM C33 / C33M. Alternatively, the fine rubber aggregate may comply with other standards such as AS2758.1, JGJ 52, and BS EN 12620. Further optionally, the fine rubber aggregate may form between 1-100% v/v, optionally between 5-50% v/v, further optionally between 15-35% v/v of all fine aggregate within the concrete slurry immediately prior to casting under pressure.

Optionally, the method comprises casting the concrete slurry under pressure for between 6-36 hours, further optionally for substantially 24 hours.

Optionally, following casting the cast concrete product is cured at atmospheric pressure, at between 10-30°C and at 50-100% humidity for between 10-30 days.

Optionally, the concrete slurry comprises Portland cement.

Optionally, the rubber aggregate has not previously undergone chemical treatment to alter its surface properties, such as by sodium hydroxide treatment.

Optionally, the method further comprises introducing reinforcement mesh or fibres into the mould or slurry prior to casting.

According to a further aspect of the invention, there is provided a cast concrete product produced according to the first aspect of the invention, wherein the cast concrete product is either: a masonry brick or block such as a Bessemer block, a pre-fabricated pipe, a pre-fabricated construction beam, a pre-fabricated construction wall, or a prefabricated construction slab.

Throughout this specification and the claims which follow, unless the context requires otherwise, the word "comprise" and variations thereof such as "comprises" and "comprising", will be understood to include the inclusion of a stated integer or step or group of integers or steps but not the exclusion of any other integer or step or groups of integers or steps.

### BRIEF DESCRIPTION OF THE FIGURES

FIGURE 1 shows an image of chipped waste tyre rubber as utilised as coarse rubber aggregate in experiments according to embodiments of the invention.
FIGURE 2 shows the grading of coarse rubber aggregate and crushed granite as utilised in experiments according to embodiments of the invention.
FIGURE 3 shows a process to cast concrete comprising coarse rubber aggregate according to an embodiment of the invention.
FIGURE 4 shows an MTS machine configured to perform testing of concrete specimens.
FIGURE 5 shows the failure patterns of compressed and uncompressed concrete specimens produced by the present inventors under uniaxial compression testing.
FIGURE 6 shows stress-strain curves of compressed and uncompressed concrete specimens across a range of rubber replacement values as produced by the present inventors.
FIGURE 7 shows the stress-strain curves of compressed and uncompressed concrete specimens having the same rubber replacement ratio, at various rubber replacement ratios as produced by the present inventors.
FIGURE 8 provides a range of graphs relating demonstrating the comparative: compressive strength, peak strain, ultimate strain, modulus of elasticity, toughness, and specific toughness properties of compressed and uncompressed concrete specimens produced by the present inventors.
FIGURE 9 shows SEM images to show the microstructure of concrete specimens produced by the present inventors.
FIGURE 10 shows photographs of the inner surfaces of concrete specimens produced and tested by the present inventors.
FIGURE 11 shows a Bessemer concrete block.
FIGURE 12 demonstrates the relative mechanical properties of standard existing concrete, as well as compressed and uncompressed concrete specimens produced by the inventors.

### DETAILED DESCRIPTION

It will be convenient to further describe embodiments of the invention, as well as research relating to the invention, with reference to the accompanying drawings. Other embodiments are possible, and consequently, the particularity of the accompanying drawings is not to be understood as superseding the generality of the preceding description of the invention.

Research and experiments performed by the inventors in developing the invention are now discussed.

### Materials

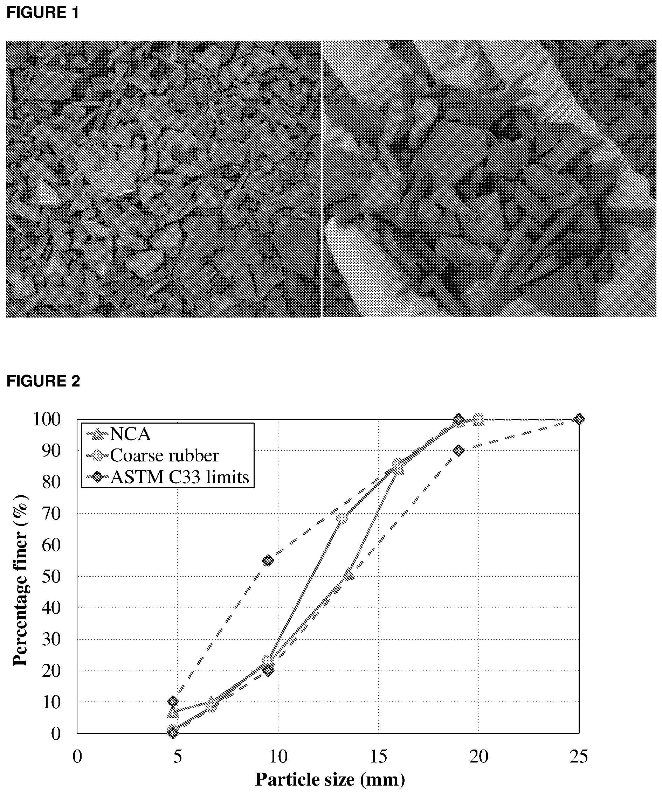

The following materials were used to prepare concrete slurries utilised in experiments performed by the inventors:
chipped waste tyre rubber as shown in Figure 1 and further detailed in Table 1 below and Figure 2 was obtained for use as coarse rubber aggregate from a recycling plant in Guangzhou, China (the coarse rubber aggregate had not undergone chemical treatment, however this is nevertheless envisaged according to alternative embodiments of the invention);
crushed granite as further detailed in Table 1 below and Figure 2 was used as a 'natural coarse aggregate', or 'NCA';
river sand was used as fine aggregate;
ordinary Portland cement of type P.II52.5R; and
tap water.

**Table 1 - Physical properties of coarse aggregates**

| **Aggregate type** | **Water absorption (%)** | **Specific gravity** | **Bulk density (Kg/m³)** |
|---|---|---|---|
| NCA (i.e. crushed granite) | 1.3 | 2.66 | 1513 |
| Coarse rubber aggregate | 1.7 | 1.12 | 704 |

As shown in Figure 2, the coarse rubber aggregate and crushed granite was graded to comply with ASTM C33:2016 requirements.

### Preparation and details of specimens

To prepare concrete specimens for experimentation, the inventors replaced a portion of crushed granite with coarse rubber aggregate at nine different proportions by volume (i.e., 0%, 10%, 15%, 20%, 30%, 40%, 50%, 80% and 100%). The constituents of each slurry are further detailed by volume in Table 2 below, whereby for example:
'R10' and 'R20' each respectively refer to replacement of 10% and 20% by volume of crushed granite with coarse rubber aggregate; and
'R10-U' refers to a concrete specimen that underwent casting without pressure, while 'R10-C' refers to a concrete specimen that underwent casting under pressure.

More generally, unless the context otherwise requires, throughout this specification:
'R' is used to refer to concrete incorporating coarse rubber aggregate;
'NAC' is used to refer to concrete incorporating only natural coarse aggregate;
'C' is used to refer to concrete that has undergone casting under pressure;
'U' is used to refer to concrete that has undergone casting without pressure,
such that R-C concrete refers to concrete incorporating coarse rubber aggregate that has undergone casting under pressure and R-U concrete refers to concrete incorporating coarse rubber aggregate that has undergone casting without pressure.

All concrete slurries were prepared using a double shaft concrete mixer following practices set out in ASTM C192:2016 as discussed below. The slump of each concrete slurry was observed to be between 25-50 mm. The addition of coarse rubber aggregate was not observed to affect the workability of concrete slurry and no bleeding or segregation was observed in any concrete slurry.

**Table 2 - Details of mix proportions**

| **Concrete ID** | **Constituents (kg/m³)** | | | | |
|---|---|---|---|---|---|
| | **Cement** | **Sand** | **Crushed Granite** | **Chipped rubber** | **Water** |
| NAC | 286.3 | 535.5 | 705.9 | - | 137.43 |
| R10-U | 286.3 | 535.5 | 635.3 | 32.8 | 137.43 |
| R10-C | | | | | |
| R15-U | 286.3 | 535.5 | 600.0 | 49.3 | 137.43 |
| R15-C | | | | | |
| R20-U | 286.3 | 535.5 | 564.7 | 65.7 | 137.43 |
| R20-C | | | | | |
| R30-U | 286.3 | 535.5 | 494.1 | 98.5 | 137.43 |
| R30-C | | | | | |
| R40-U | 286.3 | 535.5 | 423.5 | 131.4 | 137.43 |
| R40-C | | | | | |
| R50-U | 286.3 | 535.5 | 352.9 | 164.2 | 137.43 |
| R50-C | | | | | |
| R80-U | 286.3 | 535.5 | 141.2 | 262.7 | 137.43 |
| R80-C | | | | | |
| R100-U | 286.3 | 535.5 | - | 328.4 | 137.43 |
| R100-C | | | | | |

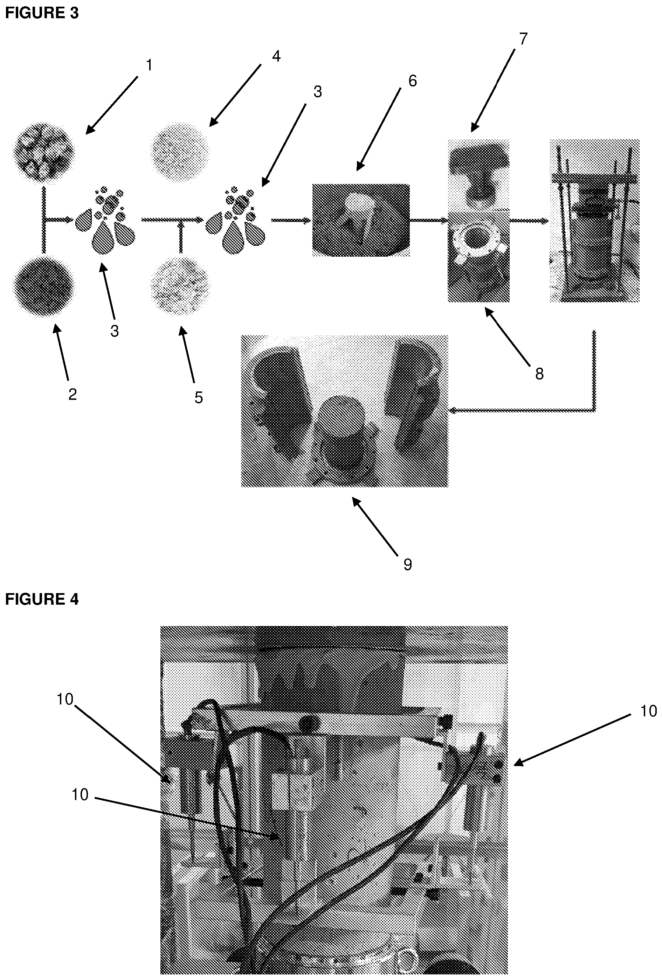

Figure 3 shows the process used by the inventors to prepare concrete slurry and cast concrete specimens. Coarse rubber aggregate **2** and crushed granite **1** were initially mixed with a small amount of water **3** in a mixer **7** for one minute. Sand **4,** Portland cement **5** and further water **3** were added and the slurry was mixed for a further two minutes. After allowing the slurry to stand for three minutes, the slurry was mixed for a further two minutes to provide concrete slurry ready for casting.

After mixing, the concrete slurry was filled into a specially designed mould **8** up to a height calculated based on the volume of coarse rubber aggregate in the cement slurry (see further discussion below). After filling the mould **8,** force was applied by a jack **9** to compress the R-concrete slurries for a period of 24 hours.

For R-concrete specimens in which coarse rubber aggregate replaced crushed granite at between 0 and 40% by volume, the maximum pressure applied ranged from between 6.9 MPa to 27.7 MPa so as to ensure a reduction in cement slurry volume equal to volume of rubber in the concrete slurry when unpressurised. That is, where a R-concrete slurry for example incorporated 500mL of coarse rubber aggregate when unpressurised, the jack **9** was configured to provide a pressure which reduced the overall volume of the R-concrete slurry by 500mL. For R-concrete slurry incorporating between 50%-100% coarse rubber aggregate, the maximum load capacity of the jack limited the maximum pressure available to 27.7 MPa.

Noting that the required pressure load may reduce while concrete gains strength during casting, a pressure load to keep the concrete volume unchanged during casting was maintained for 24 hours, after which the R-concrete specimens **10** were de-moulded. Concrete specimens were all then further cured for 28 days in a moist curing chamber with a temperature of 20°C and relative humidity of 95%.

In total, 24 R-C concrete and 27 R-U concrete specimens were cast. All concrete specimens where configured to have the same size of 150 mm (diameter) x 300 mm (height). For each combination (e.g. of R10-C or of R10-U), three identical specimens were cast and tested.

### Testing and results

Uniaxial compression tests were performed using an MTS machine having a capacity of 3000 kN. As shown in Figure 4, four linear variable displacement transducers **10** ('LVDTs') were mounted at 90° relative to each other to measure axial deformation. All LVDTs were attached to an aluminium frame fixed to the middle of a concrete specimen. The gauge length of the LVDTs was 185 mm. All the specimens were tested under displacement control mode with a loading rate of 0.3 mm/min. During the test, the applied load and deformation were recorded by an automatic data acquisition system.

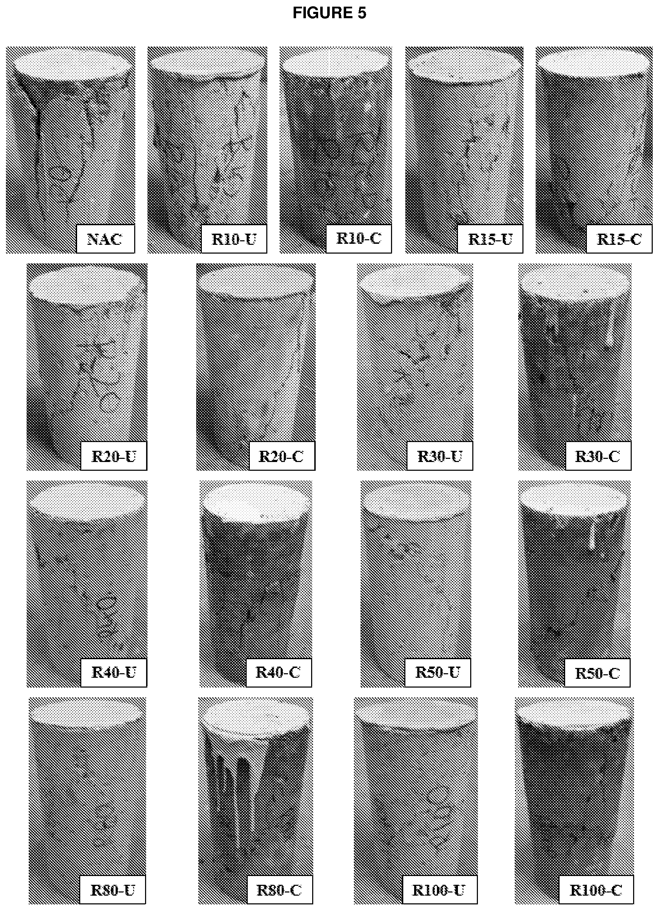

Figure 5 shows the failure patterns of all concrete specimens under uniaxial compression testing. Specimens incorporating no chipped rubber (i.e. 'natural aggregate concrete' or 'NAC' specimens) showed wider and more concentrated cracks when compared to R-concrete specimens. For both R-C and R-U concrete specimens, the width, length and number of cracks was observed to be inversely proportional to the increased rubber replacement ratio (i.e. the greater amount of coarse rubber aggregate used replace crushed granite). Complete separation of concrete chunks from test concrete specimens was observed in NAC specimens (i.e. chunks of concrete completely broke off from the test specimens). However, no such behaviour was observed in R-concrete specimens which, without wishing to be bound by theory, is believed to relate to the bridging of cracks by the rubber aggregate. Both R-C and R-U concrete specimens were found to be capable of undergoing greater deformation while still holding together tightly. During the softening phase, extra strain was taken by the R-concrete specimens which improved the post-peak behaviour and the toughness of the R-concrete.

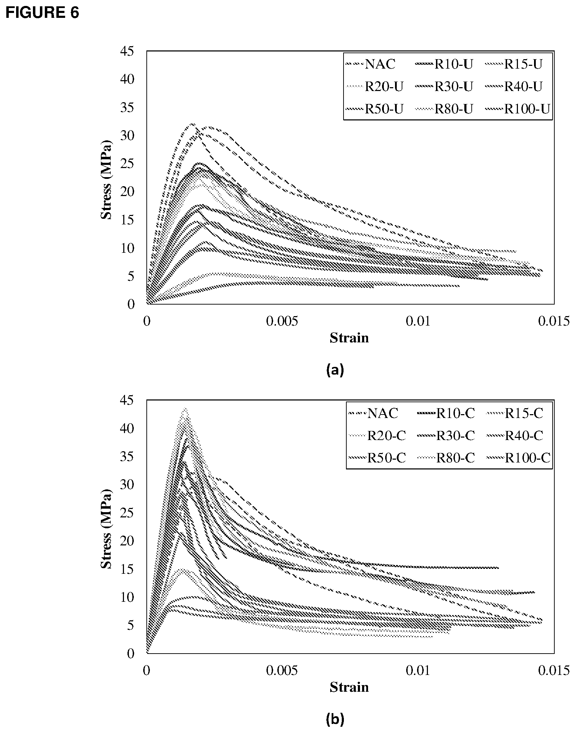

Figure 6 shows the stress-strain curves of R-U and R-C concrete specimens, in which stress-strain curves of R-U and R-C concrete specimens are shown in Figure 6(a) and Figure 6(b) such that:
Figure 6(a) shows that the stress-strain curves of R-U concrete specimens gradually flatten with increased use of coarse rubber aggregate. R-U concrete specimens also demonstrated a lower peak (i.e., lower compressive strength) and smaller initial slope (i.e., smaller elastic modulus) with increased use of coarse rubber aggregate; and
similar trends can be observed in Figure 6(b) for R-C concrete specimens. However, R-C concrete specimens showed a sharper stress-strain curve with higher concrete strength and elastic modulus compared with corresponding R-U-specimens.

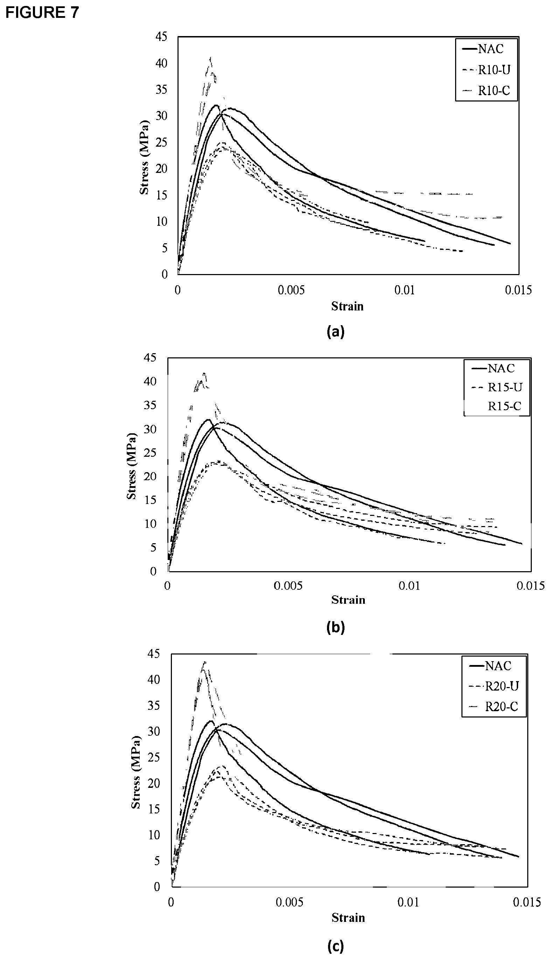

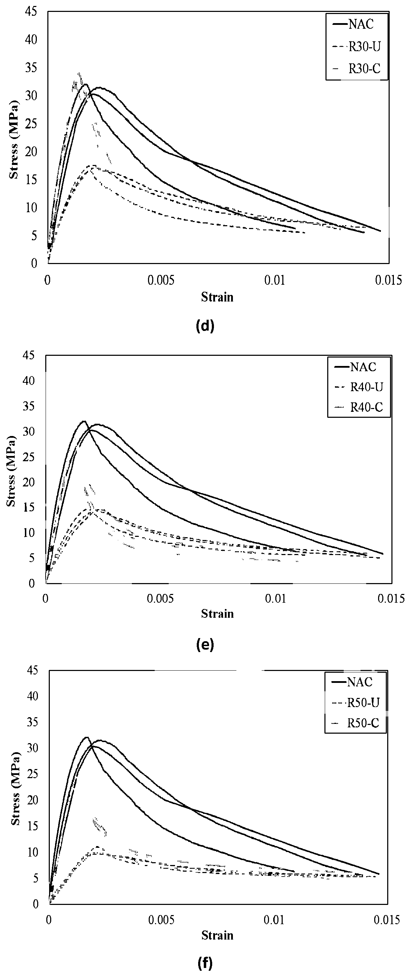

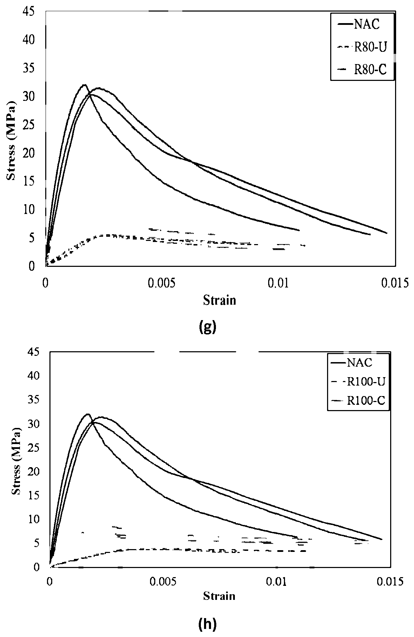

Figure 7 compares the stress-strain curves of R-C and corresponding R-U concrete specimens of the same rubber replacement ratio. This figure clearly shows the effect of pressure during casting on the stress-strain behaviour of R-concrete. Increases in peak stress (compressive strength) and initial slope (elastic modulus) were observed across R-C concrete specimens when compared to corresponding R-U concrete specimens

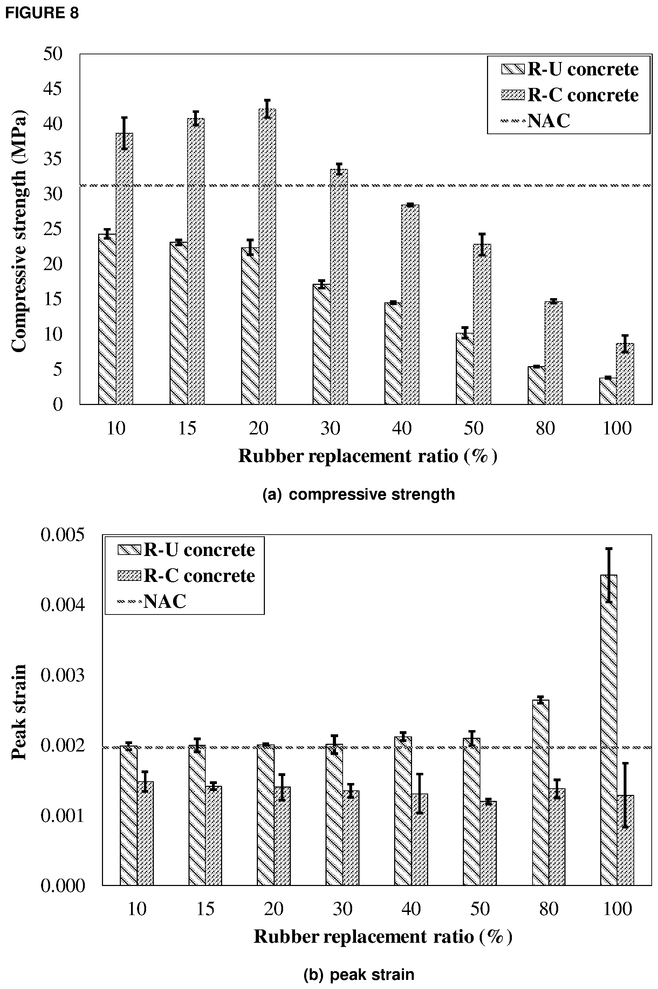

Figure 8(a) shows the average compressive strength values of R-C and U-C concrete specimens at varying replacement ratios of rubber. For R-U concrete specimens, a reduction in compressive strength was observed with increasing replacement ratio of coarse rubber aggregate. For instance, NAC specimens demonstrated an average strength of 31 MPa, which reduced to 24 MPa, 17 MPa, 10 MPa and 4 MPa for R10-U, R30-U, R50-U, and R100-U specimens respectively. Without wishing to be bound by theory, the inventors attributed this reduction to the poor bond between chipped rubber and cement paste and the soft and elastic material properties of rubber, resulting in premature cracking in the surrounding cement paste.

All the R-C concrete specimens demonstrated a concrete strength significantly higher than that of corresponding R-U concrete specimens. The concrete strength of the R50-C concrete specimen was found to be close to that of the R15-U concrete specimen, thereby demonstrating the effectiveness of casting under pressure to enhance rubber concrete performance.

For R-C concrete, an increase in concrete strength was observed compared with NAC for specimens at a rubber replacement ratio up to 30%. For example, R10-C and R20-C specimens demonstrated respective 24% and 35% increases in concrete strength when compared to NAC specimens. However, a reduction in concrete strength of R-C concrete specimens was still observed compared with NAC for replacement ratios of rubber higher than 30%.

Figure 8(b) shows the average peak strain values of R-C and R-U concrete specimens with incorporating rates of coarse rubber aggregate. For R-U concrete specimens, an increase in peak strain was observed with increased replacement ratio of coarse rubber aggregate. For instance, NAC specimens demonstrated an average peak strain of 0.002, which increased to 0.0021, 0.0026, and 0.0044 for R40-U, R80-U, and R100-U specimens respectively. Without wishing to be bound by theory, the inventors attributed this to the reduction in elastic modulus of uncompressed R-concrete specimens when compared to NAC specimens, which resulted in larger deformation.

For R-C concrete specimens, a reduction in peak strain was observed with increased incorporation of coarse rubber aggregate. R10-C, R30-C, R50-C, and R100-C concrete specimens respectively demonstrated 25%, 31%, 39% and 34% reductions in peak strain when compared to NAC specimens. All R-U concrete specimens demonstrated higher peak strains than corresponding R-C concrete specimens. Without wishing to be bound by theory, the reduction in peak strain of R-C concrete specimens was attributed to an increased elastic modulus.

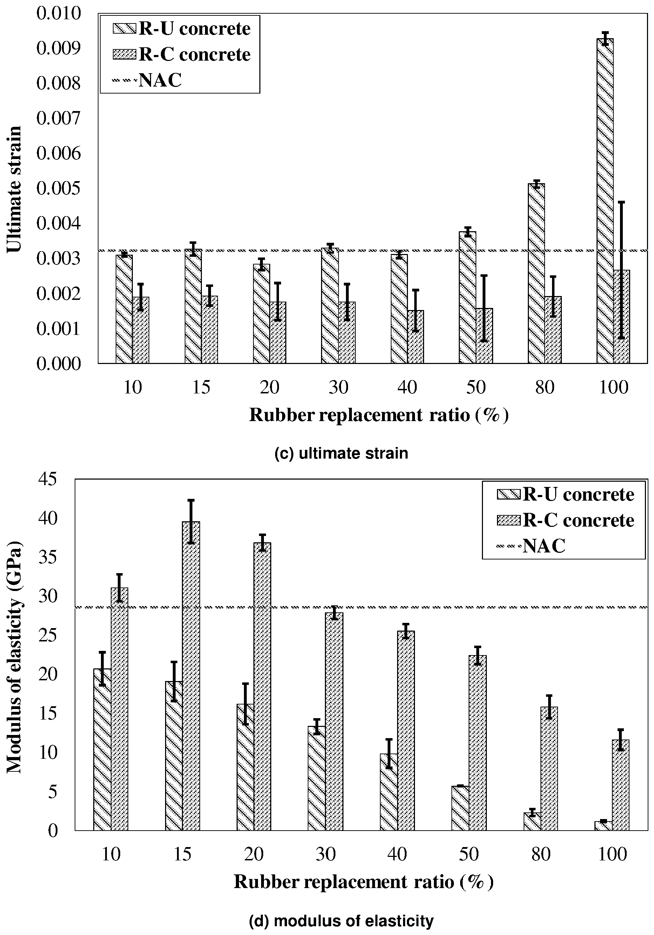

Figure 8(c) shows the average ultimate strain values of R-C and R-U concrete specimens at the various rubber replacement ratios. Ultimate strain of all specimens is taken as the strain at a point on the descending branch corresponding to 0.85 times the peak stress. As the descending parts of the stress-strain curves of concrete specimens depend on the rigidity of the testing machine, ultimate strain values are given for reference only and were not be considered for analytical modelling.

For R-U concrete specimens, no significant effect on ultimate strain was observed up to 40% replacement ratio of coarse rubber aggregate when compared to NAC specimens. However, an increase in an ultimate strain of R-U concrete specimens was observed for R50-U and R100-U concrete specimens compared to NAC specimens. For instance, the NAC specimens had an average ultimate strain of 0.0032, which increased to 0.0038, 0.0051, 0.0093 for R50-U, R80-U and R100-U specimens, respectively.

For R-C concrete specimens, a reduction in ultimate strain was observed with increased replacement ratio of rubber. For instance, R10-C and R30-C specimens demonstrated 41% and 46% reductions in ultimate strain when compared to NAC specimens. All R-U concrete specimens demonstrate an ultimate strain higher than corresponding R-C concrete specimens.

The modulus of elasticity of all concrete specimens was determined from the initial slope of the axial stress-strain curves. Fig. 8(d) demonstrates the average values of modulus of elasticity for the concrete specimens. For R-U concrete specimens, a reduction in modulus of elasticity was observed with increasing replacement ratios of rubber. For instance, the NAC specimens demonstrated an average elastic modulus of 29 GPa, which reduced to 21 GPa, 13 GPa, 6 GPa and 1 GPa for R10-U, R30-U, R50-U, and R100-U specimens, respectively. The elastic modulus of coarse rubber aggregate is far much lower than the elastic modulus of crushed granite, which resulted in a lower elastic modulus of R-concrete specimens compared to NAC specimens.

For R-C concrete specimens, an increase in elastic modulus was observed for specimens incorporating a rubber replacement ratio up to 15%. For instance, R10-C and R15-C specimens demonstrated 9% and 38% increases in elastic modulus as compared to NAC specimens. A reduction in elastic modulus of R-C concrete specimens was observed with increasing rubber replacement ratios after reaching its peak at 15% rubber replacement ratio. Still, specimens with a rubber replacement ratio up to 30% demonstrated an elastic modulus higher or close to NAC specimens.

All R-C concrete specimens demonstrated an elastic modulus significantly higher than corresponding R-U concrete specimens. The elastic modulus of R50-C specimens was higher than R10 specimens, which demonstrated the effectiveness of the casting under pressure in enhancing the rigidity of R-concrete.

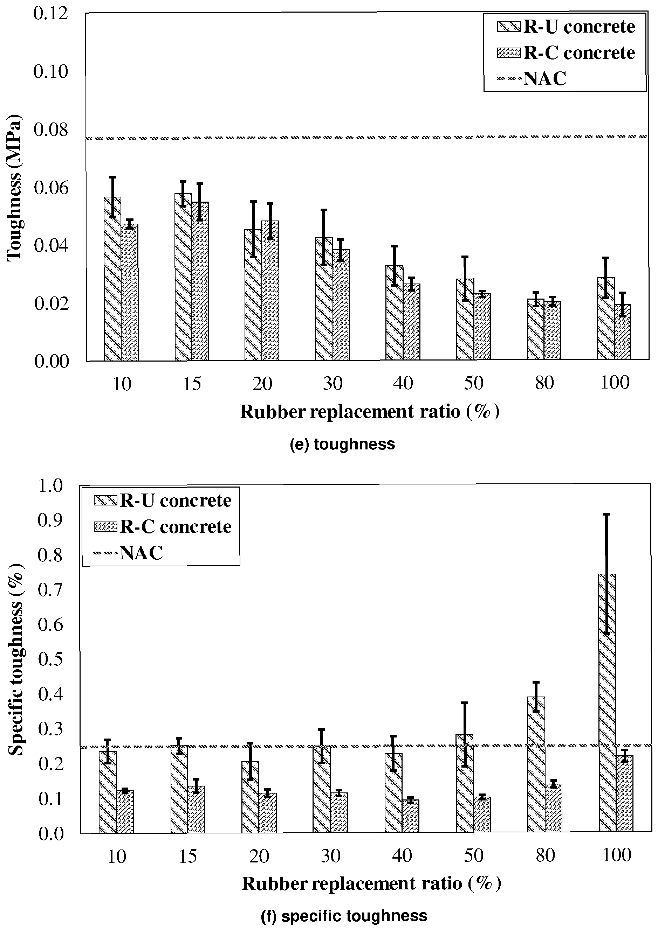

Toughness (i.e., energy absorption capacity) of concrete specimens was determined as the area under the stress-strain curves up to the ultimate strain of concrete specimens. Fig. 8(e) shows the average toughness values of the concrete specimens. For R-U concrete specimens, a reduction in toughness was generally observed increasing rubber replacement ratio. Without wishing to be bound by theory, the reduction in toughness was attributed to the lower compressive strength of R-U concrete specimens when compared to NAC specimens.

R-C concrete specimens also demonstrated an initial increase and then reduction in toughness with increasing in rubber replacement ratio. The maximum toughness was reached at a rubber replacement ratio of 15%. The toughness of R-U concrete specimens was similar to, but generally higher than corresponding R-C concrete specimens. All R-concrete specimens demonstrated toughness values lower than NAC specimens.

As toughness is affected by the compressive strength of concrete specimens, specific toughness (i.e., the ratio of toughness to the compressive strength) was considered a better measure of toughness by the inventors. Fig. 8(f) shows the average specific toughness values of the concrete specimens. For R-U concrete specimens, the incorporation of rubber had no significant effect on the specific toughness up to 40% rubber replacement ratio. However, an increase in specific toughness from 50% to 100% rubber replacement ratio was observed when compared to NAC specimens.

For R-C concrete specimens, a small reduction in specific toughness was observed with the increasing rubber replacement ratio up to 40%. This trend reversed from 50% rubber replacement ratio. All R-U concrete specimens demonstrated specific toughness significantly higher than corresponding R-C concrete specimens.

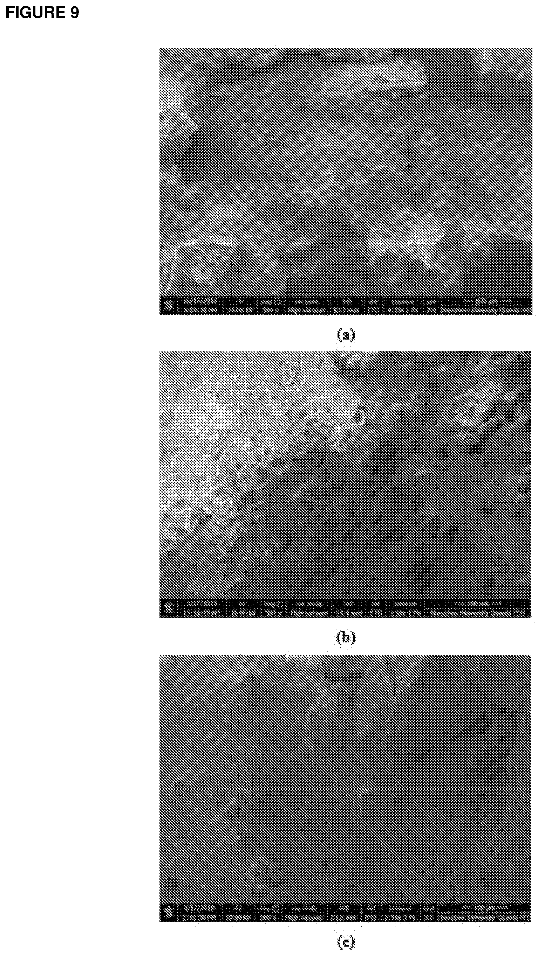

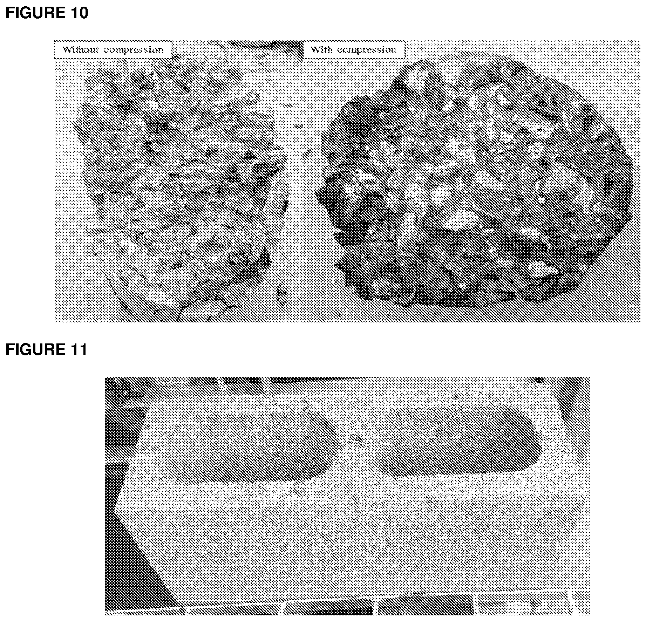

Scanning electron microscopy (SEM) was also performed on the NAC, R-C and R-U concrete specimens obtained after compression testing. The samples were oven dried and gold coated before analysis using the Quanta FEG 250 environmental scanning electron microscope. Figure 9 reproduces SEM images for an NAC specimen (Figure 9(a)), a R20-C concrete specimen (Figure 9(b)) and an R20-U concrete specimen (Figure 9(c)). Fewer micro cracks and denser microstructures were observed from R20-C concrete specimen compared to the NAC and R-U concrete specimens. Without wishing to be bound by theory, this was attributed to the filling of pores and rearrangement of particles during casting under pressure. Similar concrete structures can also be observed in the inner surface images of the tested specimens in Fig. 10. Therefore, it was therefore considered that casting of R-concrete under pressure led to denser microstructures, in turn resulting in improved strength and durability performance.

Concrete material properties are often related and the relationship between concrete strength and other material properties such as Young's modulus and peak strain are commonly used in engineering designs. Although R-C concrete can achieve similar strength and Young's modulus to NAC, the relationship between material properties are significantly different now discussed.

Two compression conditions were studied by the present inventors:
(a) for R-C-specimens at rubber replacement ratios up to 40%, applied pressure was selected to ensure that the reduced volume of wet concrete was equal to the volume of coarse rubber aggregate; and
(b) for specimens with rubber replacement ratios from 50% to 100%, a maximum pressure of 27.7 MPa was applied.

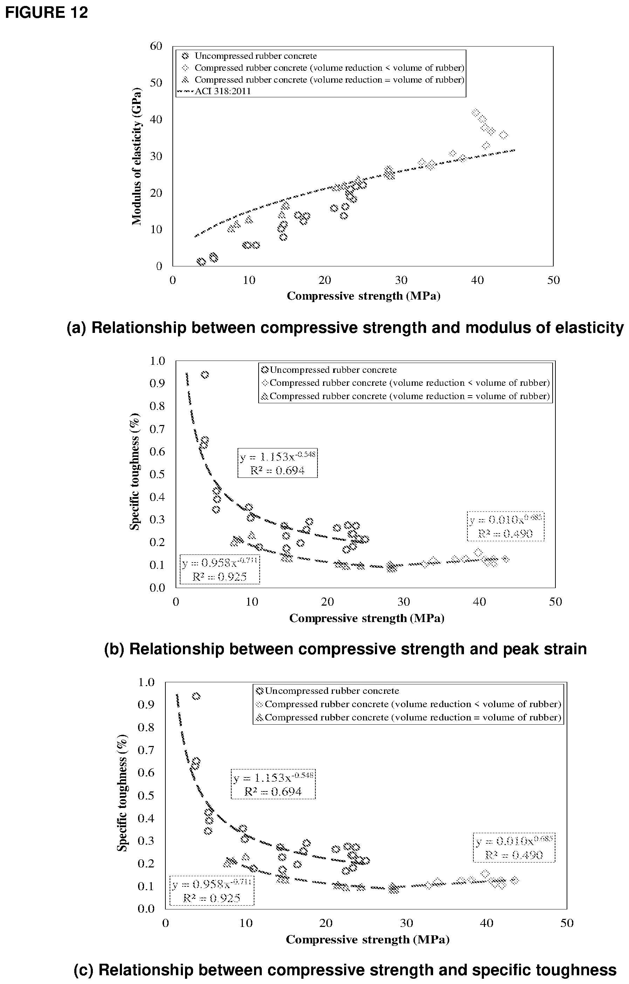

Fig. 12 shows the relationships of different mechanical properties of NAC, R-C and R-U concrete specimens. Typical models recommended by existing design codes are also shown for comparison. Fig. 12 depicts that the modulus of elasticity of R-U concrete is significantly lower than NAC and R-C concrete. Moreover, the modulus of elasticity of R-C concrete specimens at rubber replacement ratios up to 40% was comparable but slightly smaller than that of NAC specimens. On the other hand, the modulus of elasticity of the R-C concrete specimens at rubber replacement ratios of 50-100% was higher than NAC specimens. This phenomenon demonstrated that the modulus of elasticity of R-C concrete is closely related to the pressure applied during casting and that it may be possible to obtain an elastic modulus higher than that of NAC by applying further pressure.

As shown in Figure 12(b), peak strain trends in R-U and R-C concrete specimens were very different to those of NAC specimens. Peak strain values for R-C concrete appeared unrelated to concrete strength and could potentially be considered as a constant. These observations indicate that parameters of stress-strain curve for R-C concrete may be different to those of NAC.

The discoveries of the present inventors can significantly enhance mechanical properties of R-concrete while providing reduced manufacturing costs. A comparison of the cost of raw materials required for a 390 mm x 190 mm x 190 mm Besser concrete block - as shown in Figure 11 - is now made. The material costs for one Besser concrete block having cement, sand and coarse aggregates in a proportion of 1:3:5, with and without incorporating coarse rubber aggregate were estimated as 3.68 and 3.72 AUD, respectively. Details of the calculation are provided in Table 3 below. The estimated costs were inclusive of electricity costs to cast the concrete block under pressure. The comparison of costs demonstrates that concrete products made by the new technology can be cost effective compared with normal concrete materials.

**Table 3 - Cost comparison between traditional and compressed rubber Besser Block (390 x 190 x 190 mm)**

| **Calculation of cost** | **Traditional** | **Rubberized** |
|---|---|---|
| Volume of concrete in one block (cm³) | 14080 | 14079 |
| Concrete mix (Cement: Sand: Coarse aggregates) | 1:3:5 | 1:3:5 |
| Rubber replacement with coarse aggregates (%) | - | 30 |
| Rate of coarse aggregates (AUD/Kg) | 0.04 | 0.04 |
| Rate of sand (AUD/Kg) | 0.04 | 0.04 |
| Rate of cement (AUD/Kg) | 0.33 | 0.33 |
| Rate of rubber (AUD/Kg) | - | 0.08 |
| Amount of cement (Kg) | 7.59 | 7.59 |
| Amount of sand (Kg) | 11.56 | 11.56 |
| Amount of coarse aggregates (Kg) | 18.24 | 12.77 |
| Amount of rubber (Kg) | - | 2.54 |
| Cost of cement (AUD) | 2.47 | 2.47 |
| Cost of sand (AUD) | 0.47 | 0.47 |
| Cost of coarse aggregates (AUD) | 0.78 | 0.55 |
| Cost of rubber (AUD) | - | 0.198 |
| Cost of electricity for block production (AUD) | - | 0.001 |
| **Total cost in AUD (excluding transportation)** | **3.72** | **3.68** |

The novel compression technology for manufacturing rubber concrete can be used to make prefabricated construction materials such as concrete blocks/bricks, pavement blocks, and other concrete elements, e.g. wall panels, beams, slabs, road barriers etc. Aside from the significant advantages in facilitating eco-friendly constructions, the cost of the products made by this technology may be lower than traditional/existing concrete products. Just as importantly, existing manufacturing processes and facilities can generally be retained subject to the pressure casting steps of the invention.

Comparing the images of compressed concrete and uncompressed concrete in Fig. 9 and Fig. 10, it can be clearly seen that pores in concrete are largely reduced by the compression process during concrete casting. The reduction in pores and condensation of the concrete material through casting under pressure significantly improves the microstructure of the concrete and its material properties. The mechanism is similar to the effect of water/cement ratio on concrete strength. A lower water/cement ratio of concrete provide less pores in hardened concrete, and hence, higher concrete strength. From this point of view, the condensation technology used in this work may be generally applied to all concrete materials.

While the experiments described above were made in respect of coarse rubber aggregate, concrete may also be produced in which rubber crumb is incorporated to concrete slurry as fine rubber aggregate, to for example replace all or a proportion of sand otherwise found in Portland cement concrete. In doing so, the resulting concrete product may comprise fine rubber aggregate, coarse rubber aggregate, or both. Additionally, the concrete product may comprise metal reinforcement or other additives as desired or deemed appropriate. Reinforcement, such as reinforcement mesh (commonly referred to in Australia as 'reo'), which may for example be made of metal may be incorporated into the concrete slurry or introduced separately to a casting mould prior to casting under pressure. Alternatively (or additionally) reinforcement fibres, such as glass fibres, polymer fibres (e.g. Nylon or polypropylene fibres) cellulosic fibres, or metal fibres, may be incorporated into the concrete slurry prior to casting. It is envisaged that other additives may be incorporated into the concrete slurry or cast concrete product.

It will be understood to persons skilled in the art of the invention that modifications may be made without departing from the scope of the invention. The embodiments and/or examples as described herein are therefore to be considered as illustrative and not restrictive.

**Table 4 - Summary of test results**

| Specimen ID | Compressive strength (MPa) | Peak strain | Ultimate strain | Modulus of elasticity (GPa) | Toughness (MPa) | Specific toughness | Compressive strength ratio of R-C concrete / NAC | Compressive strength ratio of R-C concrete / corresponding R-U concrete | Modulus of elasticity ratio of R-C concrete / NAC | Modulus of elasticity ratio of R-C concrete / corresponding R-U concrete |
|---|---|---|---|---|---|---|---|---|---|---|
| NAC | 31 | 0.0020 | 0.003 | 29 | 0.08 | 0.25 | 1.00 | - | 1.00 | - |
| R10-U | 24 | 0.0020 | 0.003 | 21 | 0.06 | 0.23 | 0.78 | - | 0.72 | - |
| R10-C | 39 | 0.0015 | 0.002 | 31 | 0.05 | 0.12 | 1.24 | 1.59 | 1.09 | 1.50 |
| R15-U | 23 | 0.0020 | 0.003 | 19 | 0.06 | 0.25 | 0.74 | - | 0.67 | - |
| R15-C | 41 | 0.0014 | 0.002 | 40 | 0.05 | 0.13 | 1.31 | 1.77 | 1.38 | 2.08 |
| R20-U | 22 | 0.0020 | 0.003 | 16 | 0.05 | 0.20 | 0.72 | - | 0.57 | - |
| R20-C | 42 | 0.0014 | 0.002 | 37 | 0.05 | 0.11 | 1.35 | 1.88 | 1.29 | 2.28 |
| R30-U | 17 | 0.0020 | 0.003 | 13 | 0.04 | 0.25 | 0.55 | - | 0.47 | - |
| R30-C | 34 | 0.0013 | 0.002 | 28 | 0.04 | 0.11 | 1.07 | 1.96 | 0.97 | 2.10 |
| R40-U | 14 | 0.0021 | 0.003 | 10 | 0.03 | 0.22 | 0.46 | - | 0.34 | - |
| R40-C | 28 | 0.0013 | 0.002 | 26 | 0.03 | 0.09 | 0.91 | 1.96 | 0.89 | 2.59 |
| R50-U | 10 | 0.0021 | 0.004 | 6 | 0.03 | 0.28 | 0.33 | - | 0.20 | - |
| R50-C | 23 | 0.0012 | 0.002 | 22 | 0.02 | 0.10 | 0.73 | 2.23 | 0.78 | 3.94 |
| R80-U | 5 | 0.0026 | 0.005 | 2 | 0.02 | 0.39 | 0.17 | - | 0.08 | - |
| R80-C | 15 | 0.0014 | 0.002 | 16 | 0.02 | 0.14 | 0.47 | 2.72 | 0.55 | 6.83 |
| R100-U | 4 | 0.0044 | 0.009 | 1 | 0.03 | 0.74 | 0.12 | - | 0.04 | - |
| R100-C | 9 | 0.0013 | 0.003 | 12 | 0.02 | 0.22 | 0.28 | 2.29 | 0.41 | 9.59 |

## Claims

1. A method of producing a cast concrete product, the method comprising:
forming a concrete slurry incorporating rubber aggregate; and
casting the concrete slurry under sustained pressure of between 2-50MPa
throughout casting of the concrete slurry **characterized in that** the concrete slurry is cast under said sustained pressure for a period between 3-48 hours.

2. A method according to claim 1, comprising casting the concrete slurry at a pressure between 5-35MPa, further optionally between 6.9-27.7MPa.

3. A method according to either one of the preceding claims, comprising selecting a pressure under which to cast the concrete slurry based upon the amount of rubber aggregate within the concrete slurry to be cast.

4. A method according to claim 3, comprising selecting a pressure under which to cast the concrete so as to reduce the volume of the concrete slurry by approximately the volume of rubber aggregate within the concrete slurry prior to casting under pressure.

5. A method according to any one of the previous claims, wherein the rubber aggregate comprises coarse rubber aggregate (2).

6. A method according to claim 5, wherein the coarse rubber aggregate (2) substantially complies with the grading requirements for coarse aggregate set out in ASTM C33 / C33M.

7. A method according to any one of the previous claims, wherein the rubber aggregate comprises fine rubber aggregate.

8. A method according to any one of the previous claims, wherein the concrete slurry is cast under pressure for between 6-36 hours, further optionally for substantially 24 hours.

9. A method according to any one of the previous claims, wherein pressure is sustained substantially to keep concrete volume unchanged throughout casting of the concrete slurry.

10. A method according to any one of the previous claims, wherein following casting the cast concrete product is further cured at atmospheric pressure, at between 15-30°C and at 50-100% humidity for between 10-30 days.

11. A method according to any one of the previous claims, wherein the concrete slurry comprises Portland cement (5).

12. A method according to any one of the previous claims, wherein the rubber aggregate has not previously undergone chemical treatment to alter its surface properties, such as by treatment with sodium hydroxide.

13. A method according to any one of the previous claims, further comprising including reinforcement mesh or fibres in the mould (8) or the slurry prior to casting.

14. A cast concrete product produced according to the method of any one of the previous claims, wherein the cast concrete product is either: a masonry brick or block such as a Bessemer block, a pre-fabricated pipe, a pre-fabricated construction beam, a pre-fabricated construction wall, or a prefabricated construction slab.

## Patentansprüche

1. Verfahren zur Herstellung eines gegossenen Betonprodukts, wobei das Verfahren Folgendes umfasst:
Bilden einer Betonaufschlämmung, die Gummizuschlagstoff beinhaltet; und
Gießen der Betonaufschlämmung unter aufrechterhaltenem Druck zwischen 2-50 MPa während des gesamten Gießens der Betonaufschlämmung, **dadurch gekennzeichnet, dass** die Betonaufschlämmung unter dem aufrechterhaltenen Druck über einen Zeitraum zwischen 3-48 Stunden gegossen wird.

2. Verfahren nach Anspruch 1, das das Gießen der Betonaufschlämmung bei einem Druck zwischen 5-35 MPa, ferner optional zwischen 6,9-27,7 MPa umfasst.

3. Verfahren nach einem der vorstehenden Ansprüche, das das Auswählen eines Drucks, unter dem die Betonaufschlämmung gegossen werden soll, basierend auf der Menge an Gummizuschlagstoff innerhalb der zu gießenden Betonaufschlämmung umfasst.

4. Verfahren nach Anspruch 3, das das Auswählen eines Drucks umfasst, unter dem der Beton gegossen werden soll, um das Volumen der Betonaufschlämmung um ungefähr das Volumen an Gummizuschlagstoff innerhalb der Betonaufschlämmung vor dem Gießen unter Druck zu reduzieren.

5. Verfahren nach einem der vorstehenden Ansprüche, wobei der Gummizuschlagstoff groben Gummizuschlagstoff (2) umfasst.

6. Verfahren nach Anspruch 5, wobei der grobe Gummizuschlagstoff (2) im Wesentlichen die in ASTM C33/C33M festgelegten Anforderungen an die Korngrößenverteilung für groben Zuschlagstoff erfüllt.

7. Verfahren nach einem der vorstehenden Ansprüche, wobei der Gummizuschlagstoff feinen Gummizuschlagstoff umfasst.

8. Verfahren nach einem der vorstehenden Ansprüche, wobei die Betonaufschlämmung unter Druck während 6-36 Stunden, ferner optional während im Wesentlichen 24 Stunden gegossen wird.

9. Verfahren nach einem der vorstehenden Ansprüche, wobei Druck im Wesentlichen aufrechterhalten wird, um das Betonvolumen im Laufe des Gießens der Betonaufschlämmung unverändert zu halten.

10. Verfahren nach einem der vorstehenden Ansprüche, wobei im Anschluss an das Gießen das gegossene Betonprodukt ferner bei Luftdruck zwischen 15-30 °C und 50-100 % relative Luftfeuchtigkeit während 10-30 Tagen gehärtet wird.

11. Verfahren nach einem der vorstehenden Ansprüche, wobei der Betonaufschlämmung Portlandzement (5) umfasst.

12. Verfahren nach einem der vorstehenden Ansprüche, wobei der Gummizuschlagstoff vorab keiner chemischen Behandlung unterzogen wurde, um seine Oberflächeneigenschaften zu ändern, wie durch Behandlung mit Natriumhydroxid.

13. Verfahren nach einem der vorstehenden Ansprüche, das ferner das Einschließen eines Verstärkungsnetzes oder von Fasern in der Form (8) oder der Aufschlämmung vor dem Gießen umfasst.

14. Gegossenes Betonprodukt, das gemäß dem Verfahren nach einem der vorstehenden Ansprüche hergestellt wird, wobei das gegossene Betonprodukt entweder ein Mauerziegel oder ein Mauerblock, wie ein Bessemer-Block, ein vorgefertigtes Rohr, ein vorgefertigter Baubalken, eine vorgefertigte Bauwand oder eine vorgefertigte Bauplatte ist.

## Revendications

1. Procédé de production d'un produit en béton coulé, le procédé comprenant :
former un coulis de béton contenant un granulat de caoutchouc ; et
couler le coulis de béton sous une pression constante comprise entre 2 et 50 MPa durant tout le coulage du coulis de béton, **caractérisé en ce que** le coulis de béton est coulé sous ladite pression constante durant une période de 3 à 48 heures.

2. Procédé selon la revendication 1, comprenant le coulage du coulis de béton à une pression comprise entre 5 et 35 MPa, éventuellement entre 6,9 et 27,7 MPa.

3. Procédé selon l'une ou l'autre des revendications précédentes, comprenant la sélection d'une pression sous laquelle sera effectué le coulage du coulis de béton en fonction de la quantité de granulat de caoutchouc présente dans le coulis de béton à couler.

4. Procédé selon la revendication 3, comprenant la sélection d'une pression sous laquelle sera effectué le coulage du béton de façon à réduire le volume du coulis de béton approximativement dans la mesure du volume de granulat de caoutchouc présent dans le coulis de béton avant d'effectuer le coulage sous pression.

5. Procédé selon l'une quelconque des revendications précédentes, dans lequel le granulat de caoutchouc comprend un granulat de caoutchouc grossier (2).

6. Procédé selon la revendication 5, dans lequel le granulat de caoutchouc grossier (2) satisfait sensiblement aux critères de granulométrie pour un granulat grossier établis par la norme ASTM C33 / C33M.

7. Procédé selon l'une quelconque des revendications précédentes, dans lequel le granulat de caoutchouc comprend un granulat de caoutchouc fin.

8. Procédé selon l'une quelconque des revendications précédentes, dans lequel le coulis de béton est coulé sous pression durant 6 à 36 heures, éventuellement durant sensiblement 24 heures.

9. Procédé selon l'une quelconque des revendications précédentes, dans lequel la pression est maintenue sensiblement constante afin de maintenir le volume de béton inchangé durant tout le coulage du coulis de béton.

10. Procédé selon l'une quelconque des revendications précédentes, dans lequel, à la suite du coulage, le produit en béton coulé est, en outre, curé à la pression atmosphérique, entre 15 et 30 °C et à une humidité de 50 à 100 % pendant 10 à 30 jours.

11. Procédé selon l'une quelconque des revendications précédentes, dans lequel le coulis de béton comprend du ciment Portland (5).

12. Procédé selon l'une quelconque des revendications précédentes, dans lequel le granulat de caoutchouc n'a pas été soumis préalablement à un traitement chimique pour modifier ses propriétés de surface, par exemple un traitement à l'hydroxyde de sodium.

13. Procédé selon l'une quelconque des revendications précédentes, comprenant, en outre, l'introduction d'une armature ou de fibres de renforcement dans le moule (8) ou le coulis avant le coulage.

14. Produit en béton coulé, produit conformément au procédé selon l'une quelconque des revendications précédentes, le produit en béton coulé étant : une brique ou un bloc de maçonnerie tel qu'un bloc Bessemer, un tuyau préfabriqué, une poutre de construction préfabriquée, un mur de construction préfabriqué ou une dalle de construction préfabriquée.
